# EUROPÄISCHE PATENTSCHRIFT

(11) **EP 2 471 422 B1**
(45) Veröffentlichungstag und Bekanntmachung des Hinweises auf die Patenterteilung: **21.05.2014**
(21) Anmeldenummer: 11194968.1
(22) Anmeldetag: 21.12.2011
(51) Int. Cl.: A47J 31/42, A47J 42/46

(54) **Mahlwerksystem**
Grinder system
Système de broyeur

(30) Priorität: 03.01.2011 DE 102011002393
(43) Veröffentlichungstag der Anmeldung: 04.07.2012
(73) Patentinhaber: BSH Bosch und Siemens Hausgeräte GmbH, 81739 München (DE)
(72) Erfinder: Grimm, Veit, 83301 Traunreut (DE); Osterhammer, Johann, 83349 Palling (DE); Reiter, Bastian, 83101 Rohrdorf (DE)

(56) Entgegenhaltungen:
- DE-A1- 2 057 029
- DE-C- 463 754

## Beschreibung

Die vorliegende Erfindung betrifft ein Mahlwerksystem für eine Kaffeezubereitungsvorrichtung.

Es sind Kaffeezubereitungsvorrichtungen, insbesondere Kaffeevollautomaten, bekannt, bei denen ein Mahlwerk zum Mahlen von Kaffeebohnen vorgesehen ist. Bei solchen Kaffeezubereitungsvorrichtungen ist üblicherweise eine Brühanordnung vorgesehen, die in dem Mahlwerk gemahlenes Kaffeepulver durch Brühen mit Heißwasser bzw. Wasserdampf weiterverarbeitet, um Kaffee oder ein Kaffeemischgetränk als Heißgetränk bereitzustellen. Das Mahlwerk wird dabei üblicherweise von einem elektrischen Antriebsmotor angetrieben und die Kaffeebohnen werden unmittelbar vor dem Bereiten des Heißgetränks gemahlen, um einen möglichst aromatischen und unverfälschten Geschmack zu erzielen.

In derartigen Kaffeezubereitungsvorrichtungen können verschiedene Kaffeebohnen zum Einsatz kommen, z.B. können verschiedene Kaffeesorten, unterschledlich geröstete Kaffeebohnen, koffeinhaltige Kaffeebohnen und entkoffeinierte Kaffeebohnen, etc. Verwendung finden. In der Praxis kann es vorkommen, dass unmittelbar nacheinander verschiedene Kaffeebohnen zum Einsatz kommen sollen. Bei einer herkömmlichen Kaffeezubereitungsvorrichtung, die einen Bohnenbehälter und ein Mahlwerk aufweist, müssen in diesem Fall die Bohnen In dem Bohnenbehälter ausgetauscht werden. Durch in dem Mahlwerk verbleibende Reste der zuvor gemahlenen Bohnensorte entsprechen oftmals die ersten bereiteten Heißgetränke nach dem Wechsel nicht der gewünschten Bohnensorte, sondern sie basieren noch vollständig oder teilweise auf den zuvor verwendeten Bohnen. Bei Kaffeezubereitungsvorrichtungen, die über eine Mehrzahl von Bohnenbehältern verfügen aber lediglich über ein gemeinsames Mahlwerk, tritt dieses Problem In gleicher Weise auf und lediglich das Austauschen der Bohnen in dem Bohnenbehälter entfällt.

Es ist ferner bekannt, bei Kaffeezubereitungsvorrichtungen eine Mehrzahl von Bohnenbehältern und diesen zugeordnete separate Mahlwerke vorzusehen, die jeweils von separaten Antriebsmotoren angetrieben werden. Mit dieser Realisierung lassen sich die oben beschriebenen Probleme lösen, jedoch führt dies zu relativ hohen

Herstellungskosten und es trllt ein erhöhter Platzbedarf für die erforderlichen Komponenten auf, sodass diese Lösung hauptsächlich bei relativ teuren und großen Geräten für den Einsatz in der Gastronomie zum Einsatz kommt.

In der DE 10 2009 000 3114 A1 ist eine Kaffeemaschine mit einem Mahlwerk zum Mahlen von Kaffeebohnen, welches von einer Antriebseinrichtung angetrieben ist, und mit einem weiteren Mahlwerk, welches ebenfalls von der Antriebseinrichtung angetrieben ist, beschrteben. Die Antriebseinrichtung ist derart ausgebildet, dass sie simultan die beiden separaten Mahlwerke antreibt. Bei dieser Realisierung werden zwar Platz und Kosten gespart, es tritt Jedoch der Nachteil auf, dass bei Inbetriebnahme der Antriebseinrichtung immer in beiden Mahlwerken Bohnen gemahlen werden. Aus der DE 2 057 029 A1 ist eine Kaffeemaschine bekannt, die dadurch gekennzeichnet, dass zwei nebeneinander liegende Kaffeemühlen vorgesehen sind, die von einem gemeinsamen umsteuerbaren Motor angetrieben werden.

Es ist Aufgabe der vorliegenden Erfindung, ein verbessertes Mahlwerksystem für eine Kaffeezubereitungsvorrichtung und eine verbesserte Kaffeezubereitungsvorrichtung bereitzustellen, mit denen die beschriebenen Nachteile bewältigt werden.

Die Aufgabe wird durch ein Mahlwerksystem für eine Kaffeezubereitungsvorrichtung nach Anspruch 1 gelöst. Vorteilhafte Weiterbildungen sind in den abhängigen Ansprüchen angegeben,

Das Mahlwerksystem weist ein erstes Mahlwerk zum Mahlen von Kaffeebohnen und einen Antriebsmotor auf. Es ist eine Kupplung vorgesehen, die derart eingerichtet ist, dass in einer ersten Stellung der Kupplung das erste Mahlwerk an den Antriebsmotor gekoppelt ist und in einer zweiten Stellung der Kupplung der Antriebsmotor mit einem zweiten Mahlwerk zum Mahlen von Kaffeebohnen koppelbar ist. Erfindungsgemäß ist die Kupplung auf einer Welle des Antriebsmotors rotationsfest und in axialer Richtung der Welle zwischen der ersten Stellung und der zweiten Stellung verschlebbar angeordnet. Der Antriebsmotor kann z.B. in bekannter Weise durch einen elektrischen Antriebsmotor gebildet sein. Durch das Vorsehen der Kupplung kann derselbe Antriebsmotor dazu genutzt werden, wahlweise das erste Mahlwerk oder ein zweites Mahlwerk anzutreiben. Obwohl nur ein Antreiben eines ersten und eines zweiten Mahlwerks ausdrücklich genannt sind, kann die Kupplung auch derart ausgebildet sein, dass eine größere Anzahl von Mahlwerken mit demselben Antriebsmotor angetrieben werden kann. Durch das Vorsehen der Kupplung können zwei oder mehr Mahlwerke in platz- und kostensparender Weise mit demselben Antriebsmotor angetrieben werden. Das Mahlwerksystem ist ferner dazu geeignet, als Modul in einer Kaffeezubereitungsvorrichtung vorgesehen zu werden, bei der optional ein oder mehrere weitere Mahlwerke hinzugefügt werden können, die ebenfalls von dem Antriebsmotor des Mahlwerksystems angetrieben werden können.

Gemäß einer Ausgestaltung Ist das erste Mahlwerk in der zweiten Stellung der Kupplung von dem Antriebsmotor entkoppelt. In diesem Fall ist sichergestellt, dass das erste Mahlwerk nicht von dem Antriebsmotor angetrieben wird, wenn sich die Kupplung In der zweiten Stellung befindet. Folglich ist gewährleistet, dass in dem ersten Mahlwerk nur dann Bohnen gemahlen werden, wenn dies erwünscht ist. Es wird erreicht, dass der Antriebsmotor wahlweise entweder mit dem ersten oder mit einem zweiten Mahlwerk koppelbar ist. Es ist ferner möglich, zusätzlich zu der ersten Stellung und der zweiten Stellung der Kupplung noch eine oder mehrere weitere Stellungen vorzusehen, z.B. zum wahlweisen Verbinden des Antriebsmotors mit weiteren Mahlwerken oder zum gleichzeitigen Verbinden des Antriebsmotors mit mehreren Mahlwerken.

Gemäß einer Ausgestaltung weist das Mahlwerksystem eine Aufnahme zum Anschließen eines zweiten Mahlwerks zum Mahlen von Kaffeebohnen auf. In diesem Fall kann das Mahlwerksystem z.B. in einer Grundausstattung einer Kaffeezubereitungsvorrichtung mit einem ersten Mahlwerk vorgesehen sein, in die optional (z.B. als Sonderausstattung) ein zweites Mahlwerk als Modul hinzugefügt werden kann. Durch das Vorsehen der Aufnahme zum Anschließen eines zweiten Mahlwerks zum Mahlen von Kaffeebohnen kann ein zweites Mahlwerk in einfacher Weise hinzugefügt werden, wenn dies erwünscht ist.

Gemäß einer Ausgestaltung weist das Mahlwerksystem ein zweites Mahlwerk auf. In diesem Fall stellt das Mahlwerksystem bereits die volle Funktionalltät bereit, dass wahlweise das erste oder das zweite Mahlwerk durch den Betrieb des Antriebsmotors zum Mahlen von Kaffeebohnen genutzt werden kann, sodass durch Umschalten der Kupplung in einfacher Weise zwischen verschiedenen Bohnensorten gewechselt werden kann. Da zwei separate Mahlwerke vorgesehen sind, kommt es nicht zu einer unerwünschten Durchmischung der verschiedenen Bohnensorten.

Erfindungsgemäß ist die Kupplung auf einer Welle des Antriebsmotors rotationsfest und in axialer Richtung der Welle zwischen der ersten Stellung und der zweiten Stellung verschiebbar angeordnet. In diesem Fall ist eine besonders platzsparende, kompakte Ausgestaltung der Kupplung gegeben, die sich insbesondere auch für platzsparende Schneckengetriebe zum Antreiben von Mahlwerken besonders eignet. Die rotationsfeste und in axialer Richtung der Welle verschiebbare Realisierung kann insbesondere durch eine entsprechende Formgebung der Welle und der Kupplung bereitgestellt sein, bei der in Bezug auf die Rotation ein Formschluss zwischen der Welle und der Kupplung gegeben ist.

Gemäß einer Ausgestaltung ist die Kupplung über eine Lagerbuchse rotationsfest mit der Welle verbunden und die Kupplung ist relativ zu der Lagerbuchse in axialer Richtung der Welle verschiebbar. In diesem Fall kann die die rotationsfeste Fixierung der Kupplung zu der Welle vermittelnde Lagerbuchse gleichzeitig eine axiale Fixierung von ersten Getriebekomponenten für ein erstes und ein zweites Mahlwerk vermitteln.

Gemäß einer Ausgestaltung ist die Kupplung dazu ausgebildet, bei einer Bewegung in ihre erste Stellung eine formschlüssige Verbindung mit einer ersten Getriebekomponente des ersten Mahlwerks auszubilden und bei einer Bewegung in ihre zweite Stellung eine formschlüssige Verbindung mit einer ersten Getriebekomponente für ein zweites Mahlwerk auszubilden. In dieser Weise wird in besonders einfacher und kompakter Weise eine antriebsmäßige Verbindung zwischen dem Antriebsmotor und dem jeweiligen Mahlwerk ausgebildet. Diese Ausgestaltung eignet sich dabei insbesondere für den Fall, dass der Antrieb der Mahlwerke über jeweilige Schneckengetriebe erfolgt. In dem letzteren Fall können die ersten Getriebekomponenten bevorzugt durch jeweilige Schneckentriebe für das erste Mahlwerk und für ein zweites Mahlwerk gebildet sein. Gemäß einer Ausgestaltung sind die ersten Getriebekomponenten jeweils durch einen Schneckentrieb eines Schneckengetriebes gebildet.

Die Aufgabe wird auch durch eine Kaffeezubereitungsvorrichtung nach Anspruch 9 gelöst. Die Kaffeezubereitungsvorrichtung weist ein erfindungsgemäßes Mahlwerksystem auf. Mit der Kaffeezubereitungsvorrichtung werden die oben in Bezug auf das Mahlwerksystem erläuterten Vorteile erzielt.

Weitere Vorteile und Weiterbildungen ergeben sich aus der nachfolgenden Beschreibung eines Ausführungsbeispiels unter Bezugnahme auf die beigefügten Zeichnungen.
- Fig. 1: zeigt eine schematische perspektivische Darstellung eines Mahlwerksystems mit einem ersten Mahlwerk und einem zweiten Mahlwerk,
- Fig. 2: ist eine schematische Darstellung des Bereichs einer Kupplung bei dem Mahlwerksystem, wobei ein Gehäuse teilweise weggelassen ist,
- Fig. 3: ist eine vergrößerte Darstellung des Bereichs der Kupplung aus Fig. 2,
- Fig. 4: ist eine schematische Darstellung bei der sich die Kupplung in einer ersten Stellung befindet,
- Fig. 5: ist eine schematische Darstellung bei der sich die Kupplung in einer zweiten Stellung befindet und
- Fig. 6: ist eine schematische Schnittdarstellung des Bereichs der Kupplung bei dem Mahlwerksystem.

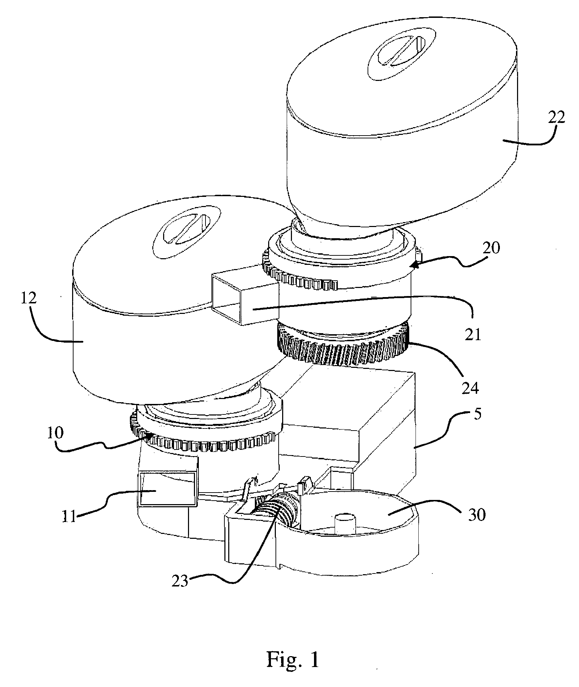

Im Folgenden wird eine Ausführungsform unter Bezugnahme auf die Fig. 1 bis Fig. 6 beschrieben.

Bei der dargestellten Ausführungsform ist das Mahlwerksystem für eine Kaffeezubereitungsvorrichtung als modulares System ausgebildet, das ein erstes Mahlwerk 10 aufweist und optional mit einem zweiten Mahlwerk 20 versehen werden kann. Das Mahlwerksystem ist dabei derart ausgebildet, dass das zweite Mahlwerk 20 durch Einstecken in dem Mahlwerksystem montiert werden kann.

In Fig. 1 ist das Mahlwerksystem mit dem ersten Mahlwerk 10 und einem zweiten Mahlwerk 20 dargestellt. In Fig. 1 ist ersichtlich, dass das Mahlwerksystem eine Aufnahme 30 zum Anschließen des zweiten Mahlwerks 20 aufweist. Das zweite Mahlwerk 20 ist in Fig. 1 in einem Zustand dargestellt, in dem es nicht in der Aufnahme 30 aufgenommen ist. Das erste Mahlwerk 10 und das zweite Mahlwerk 20 sind jeweils in an sich bekannter Weise dazu ausbildet, zugeführte Kaffeebohnen zu mahlen und diese über einen jeweils dem Mahlwerk 10 bzw. 20 zugeordneten Auswurfschacht 11 bzw. 21 einer (nicht dargestellten) Brühanordnung zuzuführen. Dem ersten Mahlwerk 10 ist ein erster Bohnenbehälter 12 zugeordnet, der dazu ausgebildet ist, Kaffeebohnen aufzunehmen und diese dem ersten Mahlwerk 10 zuzuführen. Dem zweiten Mahlwerk 20 ist ein zweiter Bohnenbehälter 22 zugeordnet, der dazu ausgebildet ist, Kaffeebohnen aufzunehmen und diese dem zweiten Mahlwerk 20 zuzuführen.

Das erste Mahlwerk 10 ist dazu ausgebildet, über ein Schneckengetriebe von einem elektrischen Antriebsmotor 2 angetrieben zu werden. Das zweite Mahlwerk 20 ist ebenfalls dazu ausgebildet, über ein Schneckengetriebe von dem Antriebsmotor 2 angetrieben zu werden. Die Ausgestaltung der Schneckengetriebe wird noch eingehender beschrieben. Ein Schneckengetriebe ist eine Form von Schraubwälzgetriebe, bei dem ein üblicherweise schraubenförmiger Schneckentrieb (bzw. Schnecke) bei einer Drehbewegung um eine Längsachse ein in den Schneckentrieb eingreifendes Zahnrad (bzw. Schneckenrad) in Drehung versetzt. Die Drehachsen des Schneckentriebs und des Zahnrads sind dabei üblicherweise senkrecht zueinander ausgerichtet, was eine besonders platzsparende Ausgestaltung ermöglicht. Mit derartigen Schneckengetrieben lässt sich eine große Untersetzung realisieren.

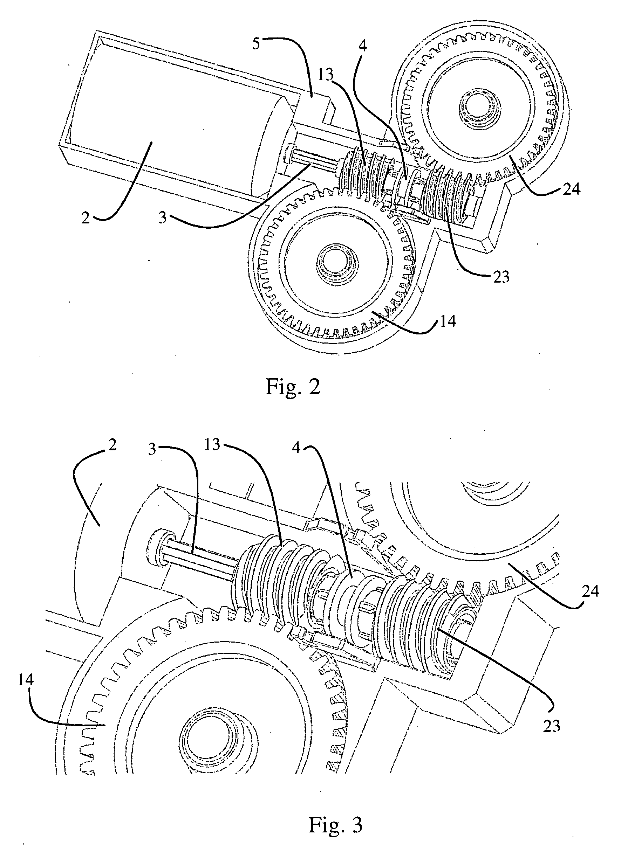

Die Ausgestaltung des Antriebs des Mahlwerksystems wird im Folgenden unter Bezugnahme auf die Fig. 2 und Fig. 3 eingehender beschrieben. Bei den Fig. 2 bis Fig. 6 ist ein Gehäuse teilweise weggelassen und ein Zahnrad, das einen Teil des Getriebes des zweiten Mahlwerks 20 bildet ist zur Verdeutlichung der Funktion ebenfalls dargestellt. Weitere Komponenten des ersten Mahlwerks 10 und des zweiten Mahlwerks 20 sind in den Fig. 2 bis Fig. 6 zur Verdeutlichung ebenfalls weggelassen.

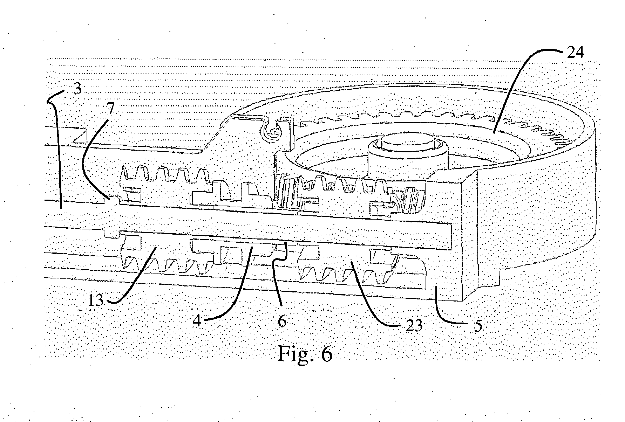

Wie in Fig. 2 zu sehen ist, ist ein elektrischer Antriebsmotor 2 vorgesehen, der eine Welle 3 aufweist, die über den Antriebsmotor 2 in Drehung um eine Längsachse versetzt wird. Auf der Welle 3 ist eine Kupplung 4 angeordnet. Die Kupplung 4 ist rotationsfest mit der Welle 3 verbunden, d.h. bei einer Drehung der Welle 3 um ihre Längsachse dreht sich die Kupplung 4 mit. Die Kupplung 4 ist relativ zu der Welle 3 in axialer Richtung der Welle 3 verschiebbar. Bei der Ausführungsform wird die rotationsfeste Verbindung der Kupplung 4 mit der Welle 3 über eine Lagerbuchse 6 vermittelt, wie insbesondere in Fig. 6 zu sehen ist. Die Lagerbuchse 6 ist dabei rotationsfest mit der Welle 3 verbunden, was durch einen Formschluss zwischen der Lagerbuchse 6 und der Welle 3 erzielt ist. Bei der dargestellten Ausführungsform ist die Welle 3 mit einem im Wesentlichen kreuzförmigen Querschnitt versehen und die Lagerbuchse 6 weist einen korrespondierenden inneren Querschnitt auf. Die Kupplung 4 ist wiederum rotationsfest mit der Lagerbuchse 6 verbunden, aber in axialer Richtung relativ zu der Lagerbuchse 6 (und somit auch zu der Welle 3) verschiebbar ausgebildet, was wiederum durch eine entsprechende formschlüssige Ausgestaltung der Außenseite der Lagerbuchse 6 und der Innenseite der Kupplung 4 erzielt ist. Durch diese Ausgestaltung sind die Kupplung 4 und die Welle 3 somit formschlüssig rotationsfest miteinander verbunden.

Auf der Welle 3 sind ferner ein erster Schneckentrieb 13 und ein zweiter Schneckentrieb 23 angeordnet. Der erste Schneckentrieb 13 und der zweite Schneckentrieb 23 sind auf entgegengesetzten Seiten der Kupplung 4 auf der Welle 3 angeordnet und bilden jeweils eine erste Getriebekomponente für ein erstes Mahlwerk bzw. ein zweites Mahlwerk. Der erste Schneckentrieb 13 steht in Eingriff mit einem ersten Zahnrad 14, das bei Rotation des ersten Schneckentriebs 13 um dessen Längsachse in Drehung versetzt wird. Im eingesetzten Zustand des zweiten Mahlwerks 20 in die Aufnahme 30 steht der zweite Schneckentrieb 23 in Eingriff mit einem zweiten Zahnrad 24, das bei Rotation des zweiten Schneckentriebs 23 um dessen Längsachse in Drehung versetzt wird. Das erste Zahnrad 14 ist rotationsfest mit einer mahlenden Komponente des ersten Mahlwerks 10 verbunden. In gleicher Weise ist das zweite Zahnrad 24 rotationsfest mit einer mahlenden Komponente des zweiten Mahlwerks 20 verbunden.

Der Antriebsmotor 2, die Welle 3, die Kupplung 4, die Lagerbuchse 6, der erste Schneckentrieb 13, der zweite Schneckentrieb 23, das erste Zahnrad 14 und das zweite Zahnrad 24 sind in einem Gehäuse 5 aufgenommen. Das Gehäuse 5 ist geräuschdämpfend ausgelegt, sodass potentiell störende Geräusche des Antriebs möglichst wenig nach außen gelangen.

Der erste Schneckentrieb 13 und der zweite Schneckentrieb 23 sind derart gehalten, dass sie in axialer Richtung der Welle 3 relativ zu der Welle 3 nicht bewegbar sind, wie insbesondere in Fig. 6 zu sehen ist. Bei der dargestellten Ausführungsform wird der zweite Schneckentrieb 23 auf einer Seite durch das Gehäuse 5 axial fixiert und auf der der Kupplung 4 zugewandten anderen Seite durch die Lagerbuchse 6, die sich an dem zweiten Schneckentrieb 23 abstützt. Der erste Schneckentrieb 13 wird auf seiner der Kupplung 4 zugewandten Seite durch die Lagerbuchse 6 axial fixiert und auf seiner gegenüberliegenden Seite durch einen an der Welle 3 vorgesehenen Vorsprung 7, der einen vergrößerten Querschnitt aufweist.

Bei dem in den Fig. 2 und Fig. 3 dargestellten Zustand sind sowohl der erste Schneckentrieb 13 als auch der zweite Schneckentrieb 23 von der Welle 3 ausgekoppelt, d.h. nicht durch die Kupplung 4 mit der Welle 3 verbunden. In dem ausgekoppelten Zustand ist der erste Schneckentrieb 13 nicht rotationsfest mit der Welle 3 verbunden, d.h. bei einer Drehung der Welle wird der erste Schneckentrieb 13 nicht in Drehung versetzt. In gleicher Weise ist der zweite Schneckentrieb 23 in dem ausgekoppelten Zustand nicht rotationsfest mit der Welle 3 verbunden, d.h. bei einer Drehung der Welle wird der zweite Schneckentrieb 23 nicht in Drehung versetzt.

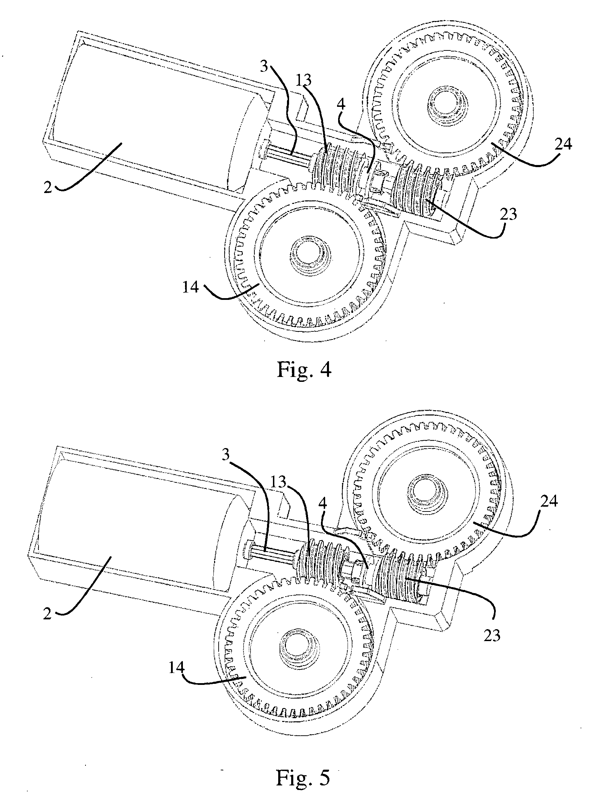

Im Folgenden wird unter Bezug auf Fig. 3 und Fig. 4 beschrieben, wie die Kupplung 4 aus der in Fig. 3 dargestellten Zwischenstellung in eine in Fig. 4 dargestellte erste Stellung gebracht wird. Die Kupplung 4 ist an ihrem Außenumfang auf der dem ersten Schneckentrieb 13 zugewandten Seite mit einer Struktur versehen, die dazu angepasst ist, formschlüssig mit einer an dem ersten Schneckentrieb 13 vorgesehenen Struktur in Eingriff zu gelangen, die bei dem dargestellten Beispiel z.B. an der Innenseite des ersten Schneckentriebs 13 vorgesehen ist. Bei der Bewegung der Kupplung 4 in axialer Richtung in die erste Stellung gelangt die Kupplung 4 formschlüssig mit dem ersten Schneckentrieb 13 in Eingriff, sodass über die Kupplung 4 eine rotationsfeste Verbindung zwischen der Welle 3 und dem ersten Schneckentrieb 13 ausgebildet wird. In dieser ersten Stellung der Kupplung 4 wird bei einer Drehung der Welle 3 das erste Mahlwerk 10 über den Schneckentrieb 13 und das Zahnrad 14 angetrieben. Wenn sich die Kupplung 4 in der ersten Stellung befindet, ist der zweite Schneckentrieb 23 gleichzeitig in einem ausgekoppelten Zustand, bei dem bei einer Drehung der Welle 3 keine Drehung des zweiten Schneckentriebs 23 erfolgt.

Wird die Kupplung 4 durch Bewegung in axialer Richtung in die in Fig. 5 dargestellte zweite Stellung gebracht, so wird der formschlüssige Eingriff zwischen der Kupplung 4 und dem ersten Schneckentrieb 13 wieder gelöst, so dass bei einer Drehung der Welle 3 keine Drehung des ersten Schneckentriebs 13 mehr erfolgt. Auf der dem zweiten Schneckentrieb 23 zugewandten Seite ist die Kupplung 4 an ihrem Außenumfang mit einer Struktur versehen, die dazu ausgebildet ist, mit einer korrespondierenden Struktur an dem zweiten Schneckentrieb 23 formschlüssig in Eingriff zu gelangen. Bei der Bewegung der Kupplung 4 in die zweite Stellung wird somit eine rotationsfeste Verbindung zwischen der Kupplung 4 und dem zweiten Schneckentrieb 23 ausgebildet. Wenn sich die Kupplung 4 in der zweiten Stellung befindet, dreht sich somit bei einer Drehung der Welle 3 auch der zweite Schneckentrieb 23. Sofern ein zweites Zahnrad 24 eines zweiten Mahlwerks 20 in der Aufnahme 30 aufgenommen ist, wird folglich das zweite Mahlwerk 20 angetrieben, wenn sich die Kupplung 4 in der zweiten Stellung befindet.

Der Mechanismus zum Bewegen der Kupplung 4 in die erste Stellung bzw. in die zweite Stellung kann in verschiedener Weise realisiert sein. Es kann z.B. ein Schalter vorgesehen sein, mit dem die Kupplung 4 umgeschaltet wird oder es kann z.B. vorgesehen sein, dass ein Umschalten durch Ausüben von Druck auf den jeweiligen Bohnenbehälter 12 bzw. 22 ausgelöst wird.

Bei einer nicht dargestellten Ausführungsform ist eine Kaffeezubereitungsvorrichtung mit dem beschriebenen Mahlwerksystem ausgestattet. Die Kaffeezubereitungsvorrichtung weist ferner zumindest eine Brühanordnung und eine Schnittstelle zur Bedienung durch einen Benutzer auf. Die Kaffeezubereitungsvorrichtung kann weitere, bei derartigen Vorrichtungen bekannte Komponenten aufweisen.

Mit dem beschriebenen Mahlwerksystem und der beschriebenen Kaffeezubereitungsvorrichtung ist es möglich, eine Zubereitung von Heißgetränken basierend auf unterschiedlichen Bohnensorten auch unmittelbar nacheinander zu ermöglichen, ohne dass eine Durchmischung der verschiedenen Bohnensorten auftritt. Aufgrund der Nutzung nur eines Antriebsmotors 2 mit der Kupplung 4 wird dies in besonders kompakter und kostengünstiger Weise erreicht. Durch das Vorsehen der Kupplung 4 ist erreicht, dass bei einem Betrieb des Antriebsmotors 2 immer nur die jeweils gewünschte Bohnensorte gemahlen wird und das gegebenenfalls vorgesehene weitere Mahlwerk ruht. Die beschriebene Ausgestaltung der Kupplung 4 stellt ferner eine besonders kostengünstige und zuverlässige mechanische Realisierung dar. Im Vergleich mit einer Realisierung mit zwei Mahlwerken, die jeweils von separaten Antriebsmotoren angetrieben werden, ist eine sehr kostengünstige und platzsparende Anordnung gegeben, da insbesondere die Geräuschdämmung des Antriebsmotors viel Platz beansprucht.

Obwohl in Bezug auf die Ausführungsform beschrieben wurde, dass das zweite Mahlwerk 20 optional in der Aufnahme 30 installierbar ist, ist es auch möglich, das Mahlwerksystem fest mit einem ersten Mahlwerk 10 und einem zweiten Mahlwerk 20 zu versehen, d.h. das zweite Mahlwerk 20 nicht entnehmbar bzw. optional auszugestalten. Obwohl nur eine Realisierung für ein erstes Mahlwerk 10 und ein zweites Mahlwerk 20 beschrieben wurde, ist es auch möglich, das Mahlwerksystem für eine größere Anzahl von Mahlwerken auszubilden.

In Bezug auf die Ausführungsform wurde zwar im Hinblick auf die Fig. 2 und Fig.3 eine Zwischenstellung beschrieben, bei der die Kupplung 4 weder mit dem ersten Schneckentrieb 13 noch mit dem zweiten Schneckentrieb 23 in Eingriff steht, auf eine solche Zwischenstellung kann aber auch verzichtet werden, sodass nur die erste Stellung, in der die Kupplung 4 mit dem ersten Schneckentrieb 13 in Eingriff steht, und die zweite Stellung, in der die Kupplung 4 mit dem zweiten Schneckentrieb 23 in Eingriff steht vorgesehen sind. Es können aber auch noch weitere Stellungen vorgesehen sein, z.B. auch eine Stellung, bei der beide Schneckentriebe 13 und 23 rotationsfest mit der Welle 3 verbunden sind, sodass wahlweise auch in beiden Mahlwerken gleichzeitig Kaffeebohnen gemahlen werden können.

Obwohl in Bezug auf die Ausführungsform eine Realisierung beschrieben wurde, bei der die Kraftübertragung von dem Antriebsmotor 2 auf das erste Mahlwerk 10 und das optionale zweite Mahlwerk 20 über ein Schneckengetriebe erfolgt, was eine besonders kompakte Gestaltung ermöglicht, sind auch andere Ausgestaltungen möglich. Z.B. kann die Kraftübertragung von dem Antriebsmotor 2 auf die Mahlwerke auch über ineinandergreifende Zahnräder realisiert werden. Bei einer Anordnung der Welle 3 (und gegebenenfalls auch des Antriebsmotors 2) parallel zu der Rotationsachse des ersten Zahnrads 14 und zu der Rotationsachse des zweiten Zahnrads 24 kann z.B. die Kraftübertragung von der Welle 3 auf das erste Zahnrad 14 bzw. auf das zweite Zahnrad 24 (anstatt über Schneckentriebe) über ein Zahnrad erfolgen, das rotationsfest mit der Welle 3 verbunden ist und wahlweise mit dem ersten Zahnrad 14 oder dem zweiten Zahnrad 24 in Eingriff gebracht werden kann. Dabei kann z.B. dieses zusätzliche Zahnrad auf der Welle verschiebbar sein, um wahlweise mit dem ersten Zahnrad 14 oder dem zweiten Zahnrad 24 in Eingriff gebracht zu werden.

Obwohl in Bezug auf die Ausführungsform beschrieben wurde, dass die Lagerbuchse 7 als separates Bauteil ausgebildet ist, kann die Lagerbuchse 7 z.B. auch einstückig mit der Welle 3 ausgebildet sein. Es sind ferner auch verschiedene andere Realisierungen der axialen Fixierung der beiden Schneckentriebe 13 und 23 möglich, z.B. kann die axiale Fixierung auch durch entsprechende in dem Gehäuse 5 vorgesehene Vorsprünge erzielt werden.

### Bezugszeichenliste

- 2: Antriebsmotor
- 3: Welle
- 4: Kupplung
- 5: Gehäuse
- 6: Lagerbuchse
- 7: Vorsprung
- 10: erstes Mahlwerk
- 11: Auswurfschacht
- 12: erster Bohnenbehälter
- 13: erster Schneckentrieb
- 14: erstes Zahnrad
- 20: zweites Mahlwerk
- 21: Auswurfschacht
- 22: zweiter Bohnenbehälter
- 23: zweiter Schneckentrieb
- 24: zweites Zahnrad
- 30: Aufnahme

## Patentansprüche

1. Mahlwerksystem für eine Kafteezubereitungsvorrichtung mit;
einem ersten Mahlwerk (10) zum Mahlen von Kaffeebohnen, einem Antriebsmotor (2) und einer Kupplung (4), die derart eingerichtet ist, dass in einer ersten Stellung der Kupplung (4) das erste Mahlwerk (10) an den Antriebsmotor (2) gekoppelt ist und in einer zweiten Stellung der Kupplung (4) der Antriebsmotor (2) mit einem zweiten Mahlwerk (20) zum Mahlen von Kaffeebohnen koppelbar ist, **dadurch gekennzeichnet, dass** die Kupplung (4) auf einer Welle (3) des Antriebsmotors (2) rotationsfest und in axialer Richtung der Welle (3) zwischen der ersten Stellung und der zweiten Stellung verschiebbar angeordnet ist.

2. Mahlwerksystem nach Anspruch 1, **dadurch gekennzeichnet, dass** das erste Mahlwerk (10) in der zweiten Stellung der Kupplung (4) von dem Antriebsmotor (2) entkoppelt ist.

3. Mahlwerksystem nach Anspruch 1 oder 2, **dadurch gekennzeichnet, dass** das Mahlwerksystem eine Aufnahme (30) zum Anschließen eines zweiten Mahlwerks (20) zum Mahlen von Kaffeebohnen aufweist.

4. Mahlwerksystem nach einem der vorangehenden Ansprüche, **gekennzeichnet durch** ein zweites Mahlwerk (20).

5. Mahlwerksystem nach einem der vorangehenden Ansprüche, **dadurch gekennzeichnet, dass** die Kupplung (4) über eine Lagerbuchse (6) rotationsfest mit der Welle (3) verbunden ist und die Kupplung (4) relativ zu der Lagerbuchse (6) in axialer Richtung der Welle (3) verschiebbar ist.

6. Mahlwerksystem nach einem der vorangehenden Ansprüche, **dadurch gekennzeichnet, dass** die Kupplung (4) dazu ausgebildet ist, bei Bewegung in ihre erste Stellung eine formschlüssige Verbindung mit einer ersten Getriebekomponente (13) des ersten Mahlwerks (10) auszubilden und bel Bewegung in ihre zweite Stellung eine formschlüssige Verbindung mit einer ersten Getriebekomponente (23) für ein zweites Mahlwerk (20) auszubilden.

7. Mahlwerksystem nach Anspruch 6, **dadurch gekennzeichnet, dass** die ersten Getriebekomponenten (13, 23) jeweils durch einen Schneckentrieb eines Schneckengetriebes gebildet sind.

8. Kaffeezuhereitungsvorrichtung mit einem Mahlwerksystem nach einem der vorangehenden Ansprüche.

## Claims

1. Grinder system for a coffee making apparatus, having:
a first grinder (10) for grinding coffee beans, a drive motor (2) and a coupler (4) which is arranged such that in a first position of the coupler (4) the first grinder (10) is coupled to the drive motor (2) and in a second position of the coupler (4) the drive motor (2) can be coupled to a second grinder (20) for grinding coffee beans, **characterised in that** the coupler (4) is arranged on a shaft (3) of the drive motor (2) in a rotationally fixed manner and can be moved in the axial direction of the shaft (3) between the first position and the second position.

2. Grinder system according to claim 1, **characterised in that** the first grinder (10) is decoupled from the drive motor (2) in the second position of the coupler (4).

3. Grinder system according to claim 1 or 2, **characterised in that** the grinder system has a receptacle (30) for connecting a second grinder (20) for grinding coffee beans.

4. Grinder system according to one of the preceding claims, **characterised by** a second grinder (20).

5. Grinder system according to one of the preceding claims, **characterised in that** the coupler (4) is connected to the shaft (3) via a bearing bush (6) in a rotationally fixed manner and the coupler (4) can be moved relative to the bearing bush (6) in the axial direction of the shaft (3).

6. Grinder system according to one of the preceding claims, **characterised in that** the coupler (4) is designed, when moving to its first position, to form a form-fit connection to a first gear component (13) of the first grinder (10) and when moving to its second position to form a form-fit connection to a first gear component (23) for a second grinder (20).

7. Grinder system according to claim 6, **characterised in that** the first gear components (13, 23) are each formed by a worm drive of a worm gear.

8. Coffee making apparatus having a grinder system according to one of the preceding claims.

## Revendications

1. Système de broyeur pour un dispositif de préparation de café comprenant :
un premier broyeur (10) pour moudre des grains de café, un moteur de commande (2) et un dispositif d'accouplement (4) agencé de telle sorte que dans une première position du dispositif d'accouplement (4), le premier broyeur (10) est couplé au moteur de commande (2) et dans une deuxième position du dispositif d'accouplement (4), le moteur de commande (2) peut être couplé à un deuxième broyeur (20) pour moudre des grains de café, **caractérisé en ce que** le dispositif d'accouplement (4) est monté sur un arbre (3) du moteur de commande (2) de manière solidaire en rotation et de manière déplaçable en direction axiale de l'arbre (3) entre la première position et la deuxième position.

2. Système de broyeur selon la revendication 1, **caractérisé en ce que** dans la deuxième position du dispositif d'accouplement (4), le premier broyeur (10) est découplé du moteur de commande (2).

3. Système de broyeur selon la revendication 1 ou 2, **caractérisé en ce que** le système de broyeur présente un logement (30) destiné au raccordement d'un deuxième broyeur (20) pour moudre des grains de café.

4. Système de broyeur selon l'une des revendications précédentes, **caractérisé par** un deuxième broyeur (20).

5. Système de broyeur selon l'une des revendications précédentes, **caractérisé en ce que** le dispositif d'accouplement (4) est relié de manière solidaire en rotation à l'arbre (3) par un coussinet (6), et le dispositif d'accouplement (4) est déplaçable par rapport au coussinet (6) en direction axiale de l'arbre (3).

6. Système de broyeur selon l'une des revendications précédentes, **caractérisé en ce que** le dispositif d'accouplement (4) est agencé pour réaliser une liaison par complémentarité de forme avec un premier élément de transmission (13) du premier broyeur (10) quand il est déplacé dans sa première position et pour réaliser une liaison par complémentarité de forme avec un premier élément de transmission (23) d'un deuxième broyeur (20) quand il est déplacé dans sa deuxième position.

7. Système de broyeur selon la revendication 6, **caractérisé en ce que** les premiers éléments de transmission (13, 23) sont formés chacun par une vis sans fin d'une transmission à vis sans fin.

8. Dispositif de préparation de café comprenant un système de broyeur selon l'une des revendications précédentes.
